# EUROPÄISCHE PATENTSCHRIFT

(11) **EP 0 842 070 B1**
(45) Veröffentlichungstag und Bekanntmachung des Hinweises auf die Patenterteilung: **01.12.1999**
(21) Anmeldenummer: 96922763.6
(22) Anmeldetag: 11.07.1996
(51) Int. Cl.: B60T 8/40, G01L 5/22

(54) **VERFAHREN UND VORRICHTUNG ZUR ERMITTLUNG EINER DRUCKGRÖSSE**
PROCESS AND DEVICE FOR DETERMINING A PRESSURE VALUE
PROCEDE ET DISPOSITIF DE DETERMINATION D'UNE VALEUR DE PRESSION

(30) Priorität: 04.08.1995 DE 19528697
(43) Veröffentlichungstag der Anmeldung: 20.05.1998
(73) Patentinhaber: ROBERT BOSCH GMBH, 70442 Stuttgart (DE)
(72) Erfinder: WOLF, Michael, D-70806 Kornwestheim (DE); BINDER, Jürgen, D-70599 Stuttgart (DE); WISS, Helmut, D-71696 Möglingen (DE)
(86) Internationale Anmeldenummer: DE9601246
(87) Internationale Veröffentlichungsnummer: WO9706038

(56) Entgegenhaltungen:
- WO-A-94/07717
- WO-A-94/18041
- WO-A-95/03963
- WO-A-96/15927
- DE-A- 2 257 236
- DE-A- 3 819 490

## Beschreibung

### Stand der Technik

Die Erfindung betrifft Verfahren und eine Vorrichtung zur Ermittlung einer Druckgröße, insbesondere eines Differenzdruckes in einer Bremsanlage mit Blockierschutz- und oder Antriebsschlupfregelung. Dabei geht sie von der WO 94/18041 aus.

Aus dem stand der Technik sind verschiedene Verfahren und Vorrichtungen zur Ermittlung von Druckgrößen bekannt.

Die WO 94/18041 offenbart ein Verfahren bzw. eine Schaltungsanordnung zur Bestimmung der Pedalkraft als Regelgröße für eine Bremsanlage mit Blockierschutzregelung. Unter anderem enthält die Bremsanlage eine Hydraulikpumpe. Mit dieser Hydraulikpumpe wird zum einen Druckmittel, weiches zum Druckabbau aus der Radbremse abgeleitet wurde, rückgefördert. Zum anderen dient die Hydraulikpumpe der Hilfsdruckversorgung. Bei dem in der WO 94/18041 beschriebenen Verfahren wird während einer Regelbremsung der Antriebsmotor einer Hydraulikpumpe auf Generatorbetrieb umgeschaltet und die Höhe der Generatorspannung sowie deren Abklingverhalten ausgewertet. Aus der Generatorspannung und dem Abklingverhalten läßt sich der von der Pedalkraft abhängige Vordruck näherungsweise ermitteln.

Die DE-OS 38 19 490 A1 beschreibt ein Pumpsystem eines hydraulischen Stellgliedes zum Einstellen eines beweglichen Organs eines Objektes. Bel diesem Objekt handelt es sich beispielsweise um eine Bremse eines Antiblockiersystems eines KFZ. Zum Pumpsystem gehört ein Elektromotor zum Antreiben einer Pumpe, mit der ein Hydraulik-Flüssigkeitsdruck beeinflußt wird. Das Pumpsystem enthält ferner eine Prüfeinrichtung zur Erfassung des Druckes der Hydraulikflüssigkeit und damit zur Erfassung der Funktionsfähigkeit der Hydraulik. Dabei wird der Druck nicht mit Hilfe eines Sensors gemessen, sondern ausgehend von der erfaßten Motordrehzahl, der erfaßten aktuellen Stromaufnahme des Elektromotors und der aktuellen Betriebsspannung am Elektromotor, ermittelt. Ausgehend von dem so ermittelten Druckwert der Hydraulikflüssigkeit wird der Elektromotor angesteuert, bzw. wird die Funktionsfähigkeit der Hydraulik überwacht. Desweiteren zeigt die DE-OS 38 19 490 A1 eine Ermittlung des Drebmomentes des Elektromotors, ausgehend von der Motorspannung und dem Motorstrom.

### Aufgabe der Erfindung

Der Erfindung liegt die Aufgabe zugrunde, ein optimales Verfahren und eine optimale Vorrichtung bereitzustellen, mit der eine Druckgröße, insbesondere ein Differenzdruck in einer Bremsanlage mit Blockierschutz und/oder Antriebsschlupfregelung, ohne den Druck erfassende Sensoren bestimmbar ist.

Die Aufgabe wird durch die Merkmale der Ansprüche 1 oder 2 oder 5 bzw. 9 gelöst.

### Vorteile der Erfindung

Mit der erfindungsgemäßen Vorrichtung und den erfindungsgemäßen Verfahren kann der Differenzdruck, insbesondere in einer Bremsanlage mit Blockierschutz- und/oder Antriebsschlupfregelung einfach und kostengünstig ermittelt werden. Denn es kann auf die üblicherweise bei der Erfassung von Differenzdrücken eingesetzten teuren Sensoren verzichtet werden.

Die Ansteuerung der Auslaß- und insbesondere der Einlaßventile wird optimiert, was zwangsläufig zu einer Verbesserung des Regelverhaltens führt, dadurch daß bei Ansteuerung der Auslaß- bzw. Einlaßventile der Differenzdruck berücksichtigt wird.

Ein weiterer Vorteil ergibt sich bei einer sogenannten Stotterbremse. Eine Stotterbremse liegt vor, wenn der Fahrer den Vordruck PV stark variiert. Mit obiger Schätzung des Differenzdruckes kann auf einfache Weise der Vordruckabfall erkannt und die ABS-Regelung entsprechend modifiziert werden.

Weitere vorteilhafte und zweckmäßige Ausgestaltungen und Weiterbildungen der Erfindung können den Unteransprüchen entnommen werden.

### Zeichnungen

Die Erfindung wird nachstehend anhand der in den Zeichnungen dargestellten Ausführungsformen erläutert. Es zeigen Figur 1 eine schematische Darstellung wesentlicher Elemente der erfindungsgemäßen Vorrichtung, Figur 2 ein Blockdiagramm zur Ansteuerung der Rückförderpumpe, Figur 3 die an der Rückförderpumpe anliegende Spannung über der Zeit aufgetragen, und Figur 4 die Abhängigkeit verschiedener Signale voneinander.

### Beschreibung der Ausführungsbeispiele

Es ist bekannt, daß zur Modulation des Druckes in den einzelnen Radbremsen eines Fahrzeugs, das mit einer Blockierschutz- und/oder Antriebsschlupfregelung ausgerüstet ist, elektrisch betätigbare Einlaß- und Auslaßventile verwendet werden. Hierzu dienen vorzugsweise Zweiwegeventile. Der gewünschte Druckaufbaugradient oder der Druckabbaugradient wird durch Ansteuerung der Ventile mit Pulsfolgen und Variieren des Pulsdauer/Pulspauseverhältnisses erreicht.

Das Einlaßventil, das in der Bremsleitung zwischen dem Bremsdruckgeber bzw. dem Hauptbremszylinder und der Radbremse eingefügt ist, ist im allgemeinen in seiner Ruhestellung auf Durchlaß geschaltet, während das Auslaßventile, das zum Druckabbau dient, in der Ruhestellung den Druckmittelweg zurück zum Hauptbremszylinder über eine Rückförderpumpe sperrt.

Anstelle der Einlaß-/Auslaßventilpaare können auch Ventilanordnungen mit drei Schaltpositionen Verwendung finden.

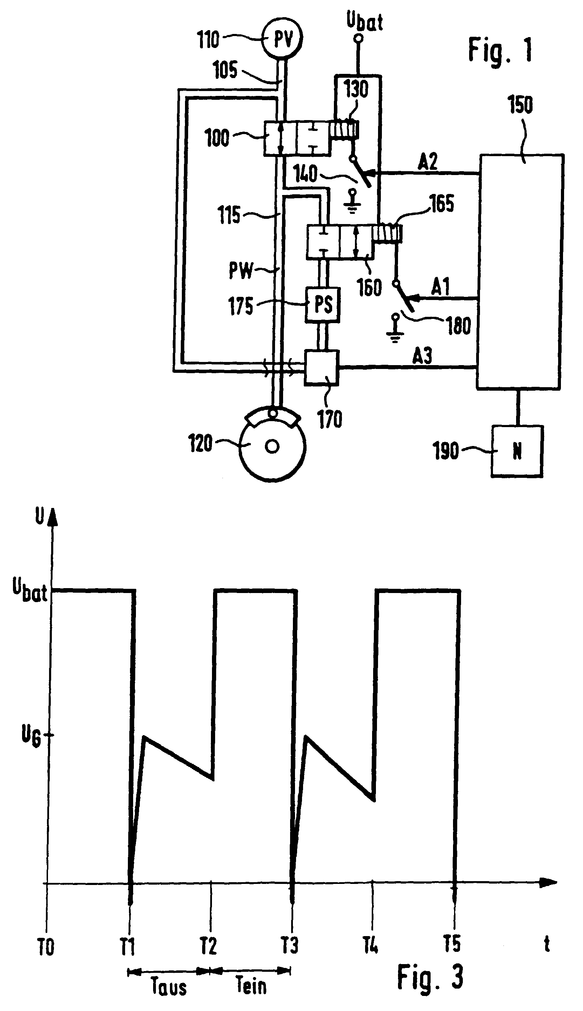

In Figur 1 sind die Verhältnisse am Beispiel eines Einlaßventils und eines Auslaßventils einer Blockierschutz-und/oder Antriebsschlupfregelung dargestellt. Die beschriebene Vorgehensweise ist nicht allein auf die Verwendung bei Einlaßventilen und Auslaßventilen bei Bremsanlagen mit Blockierschutz- und/oder Antriebsschlupfregelung beschränkt, sie kann auch bei anderen Anwendungen mit ähnlicher Anordnung Verwendung finden.

Ein Einlaßventil 100 steht über einen ersten Anschluß über eine erste Leitung 105 mit einem Hauptbremszylinder 110 in Verbindung. In der ersten Leitung 105 herrscht üblicherweise ein Druck PV, der auch als Vordruck bezeichnet wird. Über eine zweite Leitung 115 steht der zweite Anschluß des Einlaßventils 100 mit der Radbremse 120 in Verbindung. In der zweiten Leitung 115 herrscht der Druck PW, der die Bremskraft des Rades bestimmt.

Von der zweiten Leitung 115 besteht eine Verbindung zu einem Anschluß eines Auslaßventils 160, dessen zweiter Anschluß mit einer Speicherkammer 175 in Verbindung steht. Über eine Rückförderpumpe 170 steht die Speicherkammer 175 mit dem Hauptbremszylinder in Verbindung.

Bei dem dargestellten Einlaßventil 100 handelt es sich um ein sogenanntes 2/2-Magnetventil. In seiner Ruhestellung, solange kein Strom fließt, gibt das Einlaßventil 100 den Durchfluß zwischen der ersten Leitung 105 und der zweiten Leitung 115 frei. In dieser Stellung wird der Magnetventilanker durch eine Feder gehalten. Durch Bestromen einer Spule 130 wird eine Kraft entgegen der Federkraft ausgeübt, die das Ventil in seine Schließstellung bringt.

Bei dem dargestellten Auslaßventil 160 handelt es sich ebenfalls um ein sogenanntes 2/2-Magnetventil. In seiner Ruhestellung, solange keine Strom fließt, sperrt das Magnetventil 160 den Durchlaß zwischen der zweiten Leitung 115 und der Rückförderpumpe 170. In dieser Stellung wird der Magnetventilanker durch eine Feder gehalten. Durch Bestromen einer Spule 165 wird eine Kraft entgegen der Federkraft ausgeübt, die das Ventil in seinen Öffnungsstellung bringt.

Die Spule 165 steht mit einem ersten elektrischen Anschluß mit einer Versorgungsspannung Ubat und mit einem zweiten Anschluß mit einem Schaltmittel 180 in Verbindung. Entsprechend steht die Spule 130 über einen ersten elektrischen Anschluß mit der Versorgungsspannung Ubat und mit einem zweiten Anschluß mit einem zweiten Schaltmittel 140 in Verbindung. Als Schaltmittel werden vorzugsweise Feldeffekttransistoren verwendet.

Der Steueranschluß des ersten Schaltmittels 180 steht mit einer Steuereinheit 150 in Verbindung. Über diese Verbindung wird das erste Schaltmittel 180 mit einem ersten Ansteuersignal A1 beaufschlagt. Der Steueranschluß des zweiten Schaltmittels 130 steht ebenfalls mit der Steuereinheit 150 in Verbindung und wird von dieser mit einem zweiten Ansteuersignal A2 beaufschlagt.

Durch Schließen der Schaltmittel 140 und 180 wird der Stromfluß zwischen der Versorgungsspannung durch die Spule 130 bzw. 165 zum Masseanschluß freigegeben.

Bei der Steuereinheit 150 handelt es sich vorzugsweise um eine Blockierschutz- und/oder Antriebsschlupfregelung. Diese verarbeitet verschiedene Signale verschiedener Sensoren bzw. Signale anderer Steuereinheiten, wie beispielsweise einer Fahrgeschwindigkeitsregelung, einer Fahrdynamikregelung und/oder einer Fahrgeschwindigkeitsbegrenzung. Insbesondere verarbeitet diese Einrichtung Signale von Drehzahlsensoren 190, die die Drehzahlen der verschiedenen Räder des Kraftfahrzeugs erfassen. Ausgehend von den verschiedenen verarbeiteten Signalen bestimmt die Steuereinheit 150 die Signale A1 und A2 zur Ansteuerung der Spulen 130 und 165.

Mittels der Ventile 100 und 160 kann der Druckaufbau und der Druckabbau in der zweiten Leitung 115 und damit im Radbremszylinder 120 gesteuert werden.

Desweiteren wird die Rückförderpumpe von der Steuereinheit 150 mit einem Ansteuersignal A3 beaufschlagt.

Diese Einrichtung arbeitet nun wie folgt. Im normalen Betrieb befinden sich die Magnetventile in ihrer eingezeichneten Position. Betätigt der Fahrer das nicht dargestellte Bremspedal, so wird in der Leitung 105 der Druck erhöht, was zu einem entsprechenden Druckanstieg in der zweiten Leitung 115 zur Folge hat. Tritt ein Schlupf bzw. eine Blockierneigung eines Rades auf, so tritt die Steuereinheit 150 in Aktion. In diesem Fall sind im wesentlichen drei Zustände zu unterscheiden.

Im Zustand Druckabbau steuert die Steuereinheit 150 das Einlaßventil 100 derart an, daß es schließt. Gleichzeitig steuert sie das Auslaßventil 160 so an, daß es öffnet. Damit wird die Verbindung zwischen dem Radbremszylinder 120 und der Speicherkammer 175 freigegeben. Die Rückförderpumpe 170 fördert die Hydraulikflüssigkeit aus der Speicherkammer 175 in den Hauptbremszylinder 110 zurück. Dadurch wird eine Druckdifferenz zwischen dem Vordruck PV im Hauptbremszylinder und dem Druck PS in der Speicherkammer aufgebaut. Diese Druckdifferenz wird als Differenzdruck bezeichnet.

Im Zustand Druckhalten werden beiden Magnetventile in ihren geschlossenen Zustand gebracht.

Im Zustand Druckaufbauen, steuert die Steuereinheit 150 das Einlaßventil in seine geöffnete und das Auslaßventil 160 in seine geschlossene Position.

Um eine optimale Ansteuerung der Auslaß- und insbesondere der Einlaßventile zu erzielen, sollte der Differenzdruck PD zwischen dem Druck PV in der ersten Leitung 105 und dem Druck PS in der Speicherkammer 175 bekannt sein. Erfindungsgemäß wurde erkannt, daß ausgehend von einer Größe, die ein Maß für die Drehzahl der Rückförderpumpe darstellt, der Differenzdruck PD ermittelbar ist. Dies gilt insbesondere, solange das Auslaßventil 160 den Durchfluß freigibt.

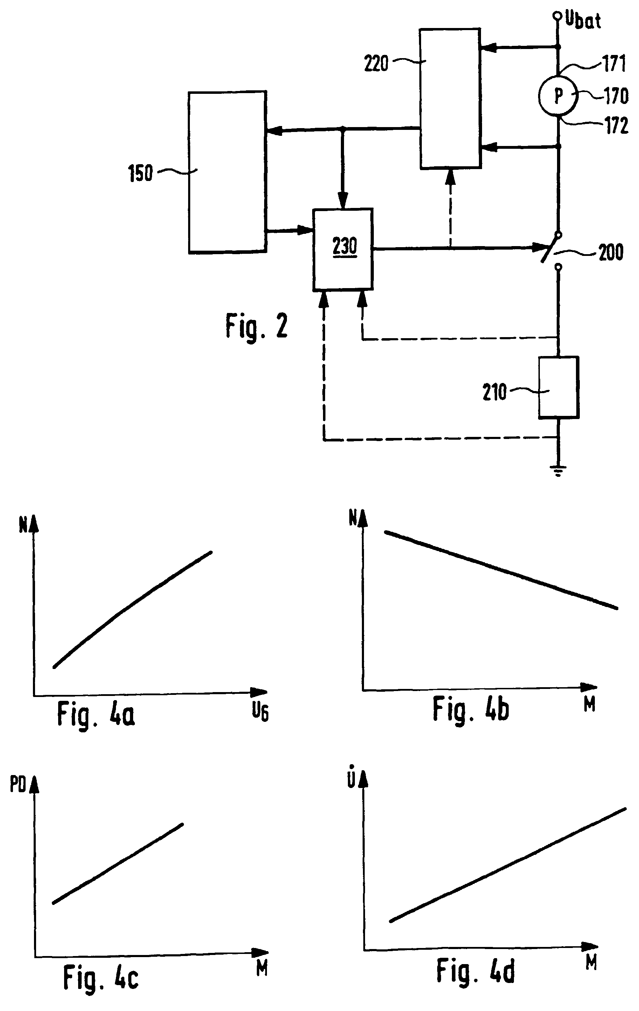

In Figur 2 ist eine Einrichtung zur Ansteuerung der Rückförderpumpe 170 dargestellt. Bereits in Figur 1 beschriebene Elemente sind mit entsprechenden Bezugszeichen bezeichnet. Die Rückförderpumpe 170 steht mit ihrem ersten Anschluß 171 mit der Versorgungsspannung Ubat in Verbindung. Ihr zweiter Anschluß 172 steht über ein Schaltmittel 200 sowie ein Strommeßmittel 210 mit Masse in Verbindung. Vom Anschluß 171 und vom Anschluß 172 der Rückförderpumpe 170 geht je eine Leitung zu einer Rückförderpumpenauswertung 220. Die Rückförderpumpenauswertung 220 beaufschlagt die Steuereinheit 150 sowie die Rückförderpumpensteuerung 230 mit einem Signal.

Die Rückförderpumpensteuerung 230 erhält ein Signal von der Steuereinheit 150 und beaufschlagt das Schaltmittel 200 sowie ggf. die Rückförderpumpenansteuerung 220 mit einem Ansteuersignal. Das Strommeßmittel 210 ist vorzugsweise als ohmscher Widerstand realisiert an dessen beiden Anschlüssen ein Spannungswert abgegriffen wird, der zu der Rückförderpumpensteuerung 230 geleitet wird.

Diese Einrichtung arbeitet nun wie folgt. Bei einer ersten Ausführungsform wird die Rückförderpumpe 170 lediglich gesteuert. Dies bedeutet, ausgehend von dem Anforderungssignal der Steuereinheit 150 steuert die Rückförderpumpensteuerung 230 den Schalter 200 entsprechend an, damit die Rückförderpumpe 170 bestromt wird.

Die Rückförderpumpe wird getaktet angesteuert. Die Rückförderpumpenauswertung 220 erfaßt die an der Rückförderpumpe anliegende Spannung. Die in den Abschaltpausen an der Rückförderpumpe anliegende Spannung ist ein Maß für die Drehzahl der Rückförderpumpe. Ausgehend von dieser Spannung kann erfindungsgemäß der Differenzdruck bestimmt und der Steuereinheit 150 zugeleitet werden.

Desweiteren kann die Spannung bzw. die Drehzahl der Rückförderpumpe der Rückförderpumpensteuerung 230 zugeleitet werden. In diesem Fall kann die Spannung bzw. die Drehzahl der Rückförderpumpe 170 von der Rückförderpumpensteuerung 230 durch Variation des Tastverhältnisses oder des Pulspauseverhältnisses geregelt werden.

Bei einer weiteren Ausgestaltung der Erfindung ist vorgesehen, daß ausgehend von dem Spannungsabfall an dem Strommeßmittel 210 der durch die Rückförderpumpe 170 fließende Strom erfaßt und auf einen vorgebbaren Sollwert geregelt wird.

In Figur 3 ist die an der Rückförderpumpe 170 anliegende Spannung U über der Zeit t aufgetragen. Zum Zeitpunkt T0 wird das Schaltmittel 200 geschlossen. Die an der Rückförderpumpe 170 abfallende Spannung entspricht etwa der Versorgungsspannung Ubat. Zum Zeitpunkt T1 wird der Schalter 200 geöffnet und die Spannung fällt kurzfristig auf Werte kleiner als Null ab. Zum Zeitpunkt T1 beginnt die Pulspause der Pulsfolge. Die während der Pulspausenzeit Taus zwischen den Zeitpunkten T1 und T2 der Ansteuer-Pulsfolge weiterlaufenden Pumpe wirkt nun als Generator. Dadurch wird an der Rückförderpumpe eine Spannung erzeugt, die ausgehend vom Wert UG über der Zeit langsam abfällt.

Zum Zeitpunkt T2 wird der Schalter 200 wieder geschlossen und die Spannung steigt auf die Versorgungsspannung Ubat an. Zum Zeitpunkt T3 nach Ablauf der Zeit Tₑᵢₙ fällt die Spannung wieder auf Werte kleiner als Null ab und steigt dann wieder auf den Wert UG an. Zum Zeitpunkt T4 wird der Schalter 200 wieder geschlossen und bis zum Zeitpunkt T5 geschlossen gehalten.

Der Wert der Spannung UG, der an der Rückförderpumpe 170 zu Beginn der Pulspause abfällt, hängt im wesentlichen von der Drehzahl N der Rückförderpumpe ab. Dieser Zusammenhang ist in Figur 4a vereinfacht dargestellt. Bei kleinen Drehzahlen der Rückförderpumpe ergibt sich eine kleine Spannung UG und bei großen Drehzahlen eine große Spannung UG.

Die Drehzahl der Rückförderpumpe hängt wiederum von dem von der Pumpe aufzubringenden Moment M ab. Dieser Zusammenhang ist vereinfacht in Figur 4b dargestellt. Ein kleines Moment M hat eine große Drehzahl und ein großes Moment eine kleine Drehzahl N zur Folge.

Ein großes Moment ist erforderlich, wenn eine große Druckdifferenz PD zwischen dem Eingang und dem Ausgang der Pumpe vorliegt. Ein kleines Moment ist erforderlich, wenn eine kleine Druckdifferenz PD vorliegt. Dieser Zusammenhang ist vereinfacht in Figur 4c dargestellt.

Das erforderliche Moment M wirkt sich aber nicht nur auf die Drehzahl und damit auf den Wert UG der abfallenden Spannung aus, sondern das Moment wirkt sich auch auf den Verlauf der Spannung aus. Bei einem größeren Moment fällt die Spannung schneller ab. Dies ist beispielsweise im Zeitraum zwischen T3 und T4 der Fall.

In Figur 4d ist der Zusammenhang zwischen der Änderung der Spannung U̇ und dem Moment M aufgetragen. Bei einem großen Moment M ergibt sich eine große Änderung der Spannung U̇ und bei einem kleinen Moment M eine kleine Änderung der Spannung U̇.

Ausgehend von der an der Pumpe anliegenden Spannung während der Abschaltpausen wird der Differenzdruck PD ermittelt. Ausgehend von dem Wert UG nach dem Abschalten ergibt sich gemäß Figur 4a die Drehzahl der Rückförderpumpe. Dieser Wert kann auch der Rückförderpumpensteuerung 230 zur Drehzahlregelung zugeführt werden. Ausgehend von der Drehzahl N ergibt sich gemäß Figur 4b, das von der Pumpe aufzubringende Moment M. Ausgehend von dem Moment M ergibt sich gemäß Figur 4c der Differenzdruck PD.

Diese Bestimmung wird in der Rückförderpumpenauswertung 220 durchgeführt. Dies kann anhand der in Figur 4a, 4b und 4c dargestellten Kennfelder bzw. gemäß eines vorgegebenen Algorithmus erfolgen.

Desweiteren ist es möglich, ausgehend von dem Spannungsabfall bzw. dem Verlauf der Spannung U in der Abschaltpause das Moment gemäß Figur 4d bzw. gemäß eines Algorithmus zu bestimmen. Ausgehend von dem Moment M ergibt sich dann entsprechend wie in Figur 4c dargestellt, der Differenzdruck PD.

Als weitere Ausgestaltung ist vorgesehen, daß ausgehend von der an der Pumpe in den Abschaltpausen anliegenden Spannung UG, dem Sollwert für die Spannung UG und dem Tastverhältnis, das erforderlich ist um die Generatorspannung UG auf den Sollwert einzuregeln, der Differenzdruck PD ermittelt wird. Voraussetzung hierzu ist, daß eine Regelung der an der Rückförderpumpe 170 abfallenden Spannung U während der Abschaltpausen vorgesehen ist und daß die Versorgungsspannung Ubat bekannt ist.

Mittels des so bestimmten Differenzdruckes PD kann die Ansteuerung der Ein- und Auslaßventile verbessert werden.

Da in der Regel der Druck PS in der Speicherkammer 175 klein gegenüber dem Vordruck PV ist, entspricht die Druckdifferenz PD dem Vordruck PV. Mit der beschriebenen Vorgehensweise kann der Vordruck PV abgeschätzt werden.

Ein weiterer Vorteil ergibt sich bei einer sogenannten Stotterbremse. Eine Stotterbremse liegt vor, wenn der Fahrer den Vordruck PV stark variiert. Mit obiger Schätzung des Differenzdruckes kann auf einfache Weise der Vordruckabfall erkannt und die ABS-Regelung entsprechend modifiziert werden.

## Patentansprüche

1. Verfahren zur Ermittlung einer Druckgröße in einer Anlage, insbesondere in einer Bremsanlage,
mit einer Förderpumpe (170), insbesondere einer Rückförderpumpe, die über eine erste Leitung (105) mit einem Hauptbremszylinder (110) in Verbindung steht und die ferner mit einer Speicherkammer (175) in Verbindung steht,
wobei die Förderpumpe (170) getaktet angesteuert wird und während der Abschaltpausen die an der Förderpumpe (170) anliegende Spannung (UG) erfaßt wird,
bei dem ein Differenzdruck (PD) zwischen einem ersten Druck (PV) in der ersten Leitung (105), insbesondere dem im Hauptbremszylinder (110) vorherrschenden Vordruck, und einem zweiten Druck (PS) in der Speicherkammer (175) ermittelt wird, **dadurch gekennzeichnet**, **daß** der Differenzdruck (PD) wie folgt ermittelt wird:
ausgehend von dem Spannungsabfall und/oder dem Verlauf der Spannung (UG) an der Förderpumpe (170) in den Abschaltpausen wird das von der Förderpumpe (170) aufzubringende Moment (M) ermittelt,
ausgehend von dem von der Förderpumpe (170) aufzubringenden Moment (M) wird der Differenzdruck (PD) ermittelt.

2. Verfahren zur Ermittlung einer Druckgröße in einer Anlage, insbesondere in einer Bremsanlage,
mit einer Förderpumpe (170), insbesondere einer Rückförderpumpe, die über eine erste Leitung (105) mit einem Hauptbremszylinder (110) in Verbindung steht und die ferner mit einer Speicherkammer (175) in Verbindung steht,
wobei die Förderpumpe (170) getaktet angesteuert wird und während der Abschaltpausen die an der Förderpumpe (170) anliegende Spannung (UG) erfaßt wird,
bei dem ein Differenzdruck (PD) zwischen einem ersten Druck (PV) in der ersten Leitung (105), insbesondere dem im Hauptbremszylinder (110) vorherrschenden Vordruck, und einem zweiten Druck (PS) in der Speicherkammer (175) ermittelt wird, **dadurch gekennzeichnet**, **daß** der Differenzdruck (PD) wie folgt ermittelt wird:
ausgehend von dem in den Abschaltpausen ermittelten Wert der an der Förderpumpe (170) anliegenden Spannung (UG) wird die Drehzahl (N) der Förderpumpe (170) ermittelt,
ausgehend von der Drehzahl (N) der Förderpumpe (170) wird das von der Förderpumpe (170) aufzubringende Moment (M) ermittelt,
ausgehend von dem von der Förderpumpe (170) aufzubringenden Moment (M) wird der Differenzdruck (PD) ermittelt.

3. Verfahren nach Anspruch 2, dadurch gekennzeichnet, daß der Wert der Drehzahl (N) der Förderpumpe (170) einer Steuerung (230), insbesondere einer Rückförderpumpensteuerung, zur Drehzahlregelung zugeführt wird, wobei durch die Steuerung (230) eine Regelung der Drehzahl (N) der Förderpumpe (170) durch Variation des Tastverhältnisses oder des Pulspausenverhältnisses durchgeführt wird, und/oder daß der ermittelte Wert der an der Förderpumpe (170) anliegenden Spannung (UG) einer Steuerung (230), insbesondere einer Rückförderpumpensteuerung, zur Spannungsregelung zugeführt wird, wobei durch die Steuerung (230) eine Regelung der Spannung (UG) durch Variation des Tastverhältnisses oder des Pulspausenverhältnisses durchgeführt wird, und/oder daß mit Hilfe der Steuerung (230), ausgehend von einem Spannungsabfall an einem Strommeßmittel (210), der durch die Förderpumpe (170) fließende Strom auf einen vorgebbaren Sollwert geregelt wird.

4. Verfahren nach Anspruch 1 oder 2, dadurch gekennzeichnet, daß zur Ermittlung der Drehzahl (N) der Förderpumpe (170), ausgehend von dem in den Abschaltpausen ermittelten Wert der an der Förderpumpe (170) anliegenden Spannung (UG), und/oder daß zur Ermittlung des von der Förderpumpe (170) aufzubringenden Moments (M), ausgehend von der Drehzahl (N) der Förderpumpe (170), und/oder
daß zur Ermittlung des Differenzdrucks (PD), ausgehend von dem von der Förderpumpe (170) aufzubringenden Moment (M), Kennfelder verwendet werden.

5. Verfahren zur Ermittlung einer Druckgröße in einer Anlage, insbesondere in einer Bremsanlage,
mit einer Förderpumpe (170), insbesondere einer Rückförderpumpe, die über eine erste Leitung (105) mit einem Hauptbremszylinder (110) in Verbindung steht und die ferner mit einer Speicherkammer (175) in Verbindung steht,
wobei die Förderpumpe (170) getaktet angesteuert wird und während der Abschaltpausen die an der Förderpumpe (170) anliegende Spannung (UG) erfaßt wird,
bei dem ein Differenzdruck (PD) zwischen einem ersten Druck (PV) in der ersten Leitung (105), insbesondere dem im Hauptbremszylinder (110) vorherrschenden Vordruck, und einem zweiten Druck (PS) in der Speicherkammer (175) ermittelt wird, **dadurch gekennzeichnet**, **daß** der Differenzdruck (PD) ausgehend von der an der Förderpumpe (170) in den Abschaltpausen anliegenden Spannung (UG), einem Sollwert für die Spannung (UG) und dem Tastverhältnis, welches erforderlich ist, um die Spannung (UG) auf den Sollwert einzuregeln, ermittelt wird, wobei während der Abschaltpausen die an der Förderpumpe (170) abfallende Spannung (UG) geregelt wird, und die Versorgungsspannung (Ubat) bekannt ist.

6. Verfahren nach Anspruch 1 oder 2 oder 5, dadurch gekennzeichnet, daß während der Ermittlung des Differenzdruckes (PD) die Förderpumpe (170) Hydraulikflüssigkeit aus dem Radbremszylinder (120) über die Speicherkammer (175) in den Hauptbremszylinder (110) fördert.

7. Verfahren nach Anspruch 1 oder 2 oder 5, dadurch gekennzeichnet,
daß der ermittelte Wert des Differenzdrucks (PD) bei der Ansteuerung von in der Bremsanlage enthaltenen Einlaßventilen (100) und/oder Auslaßventilen (160) berücksichtigt wird, und/oder
daß der ermittelte Differenzdruck (PD) als Maß für den im Hauptbremszylinder vorherrschenden Vordruck (PV) verwendet wird.

8. Verfahren nach Anspruch 1 oder 5 dadurch gekennzeichnet, daß der Wert der Drehzahl(N) der Förderpumpe (170) erfaßt und einer Steuerung (230); insbesondere einer Rückförderpumpensteuerung, zur Drehzahlregelung zugeführt wird, wobei durch die Steuerung (230) eine Regelung der Drehzahl (N) der Förderpumpe (170) durch Variation des Tastverhältnisses oder des Pulspausenverhältnisses durchgeführt wird, und/oder daß der ermittelte Wert der an der Förderpumpe (170) anliegenden Spannung (UG) einer Steuerung (230), insbesondere einer Rückförderpumpensteuerung, zur Spannungsregelung zugeführt wird, wobei durch die Steuerung (230) eine der Spannung (UG) durch Variation des Tastverhältnisses oder des Pulspausenverhältnisses durchgeführt wird, und/oder daß mit Hilfe der Steuerung (230), ausgehend von einem Spannungsabfall an einem Strommeßmittel (210), der durch die Förderpumpe (170) fließende Strom auf einen vorgebbaren Sollwert geregelt wird.

9. Vorrichtung zur Ermittlung einer Druckgröße in einer Anlage, insbesondere in einer Bremsanlage,
die eine Förderpumpe (170), insbesondere eine Rückförderpumpe, enthält, die über eine erste Leitung (105) mit einem Hauptbremszylinder (110) in Verbindung steht und die ferner mit einer Speicherkammer (175) in Verbindung steht,
die Mittel (150) zur getakteten Ansteuerung der Förderpumpe (170) enthält, die Mittel (220) enthält, mit denen während der Abschaltpausen die an der Förderpumpe (170) anliegende Spannung (UG) erfaßbar ist,
die Mittel (220) zur Ermittlung eines Differenzdrucks (PD) enthält, wobei der Differenzdruck (PD) zwischen einem ersten Druck (PV) in der ersten Leitung (105), insbesondere dem im Hauptbremszylinder (110) vorherrschenden Vordruck, und einem zweiten Druck (PS) in der Speicherkammer (175) ermittelt wird, **dadurch gekennzeichnet**, **daß** der Differenzdruck (PD) in den Mittein (220) zur Ermittlung des Differenzdruckes (PD) wie folgt ermittelt wird:
ausgehend von dem in den Abschaltpausen ermittelten Wert der an der Förderpumpe (170) anliegenden Spannung (UG) wird die Drehzahl (N) der Förderpumpe (170) ermittelt,
ausgehend von der Drehzahl, (N) der Förderpumpe (170) wird das von der Förderpumpe (170) aufzubringende Moment (M) ermittelt,
ausgehend von dem von der Förderpumpe (170) aufzubringenden Moment (M) wird der Differenzdruck (PD) ermittelt, und/oder ausgehend von dem Spannungsabfall und/oder dem Verlauf der Spannung (UG) an der Förderpumpe (170) in den Abschaltpausen wird das von der Förderpumpe (170) aufzubringende Moment (M) ermittelt,
ausgehend von dem von der Förderpumpe (170) aufzubringenden Moment (M) wird der Differenzdruck (PD) ermittelt, und/oder ausgehend von der an der Förderpumpe (170) in den Abschaltpausen anliegenden Spannung (UG), einem Sollwert für die Spannung (UG) und dem Tastverhältnis, welches erforderlich ist, um die Spannung (UG) auf den Sollwert einzuregeln, wird der Differenzdruck (PD) ermittelt, wobei während der Abschaltpausen die an der Förderpumpe (170) abfallende Spannung (UG) geregelt wird, und die Versorgungsspannung (Ubat) bekannt ist.

## Claims

1. Method of determining a pressure variable in a system, in particular in a braking system, having a delivery pump (170), in particular a scavenging pump, which is connected by a first line (105) to a brake master cylinder (110), and which is also connected to a pressure chamber (175), the delivery pump (170) being activated cyclically and the voltage (UG) across the delivery pump (170) being detected during the "off" periods, in which a differential pressure (PD) between a first pressure (PV) in the first line (105), in particular the pilot pressure prevailing in the brake master cylinder (110), and a second pressure (PS) in the storage chamber (175) is determined, characterized in that the differential pressure (PD) is determined as follows:
the torque (M) to be applied by the delivery pump (170) is determined on the basis of the voltage drop and/or the variation in the voltage (UG) across the delivery pump (170) in the "off" periods,
the differential pressure (PD) is determined on the basis of the torque (M) to be applied by the delivery pump (170).

2. Method of determining a pressure variable in a system, in particular in a braking system, having a delivery pump (170), in particular a scavenging pump, which is connected by a first line (105) to a brake master cylinder (110), and which is also connected to a pressure chamber (175), the delivery pump (170) being activated cyclically and the voltage (UG) across the delivery pump (170) being detected during the "off" periods, in which a differential pressure (PD) between a first pressure (PV) in the first line (105), in particular the pilot pressure prevailing in the brake master cylinder (110), and a second pressure (PS) in the storage chamber (175) is determined, characterized in that the differential pressure (PD) is determined as follows:
the rotational speed (N) of the delivery pump (170) is determined on the basis of the voltage (UG) across the delivery pump (170) determined during the "off" periods,
the torque (M) to be applied by the delivery pump (170) is determined on the basis of the rotational speed (N) of the delivery pump (170),
the differential pressure (PD) is determined on the basis of the torque (M) to be applied by the delivery pump (170).

3. Method according to Claim 2, characterized in that the value of the rotational speed (N) of the delivery pump (170) is fed to a controller (230), in particular a scavenging pump controller, for the purpose of speed regulation, the controller (230) regulating the rotational speed (N) of the delivery pump (170) by varying the pulse duty factor or the mark/space ratio, and/or in that the value of the voltage (UG) determined across the delivery pump (170) is fed to a controller (230), in particular a scavenging pump controller, for the purpose of voltage regulation, the controller (230) regulating the voltage (UG) by varying the pulse duty factor or the mark/space ratio, and/or in that, with the aid of the controller (230), and on the basis of a voltage drop across a current measuring means (210), the current flowing through the delivery pump (170) is regulated to a predefinable desired value.

4. Method according to Claim 1 or 2, characterized in that in order to determine the rotational speed (N) of the delivery pump (170), on the basis of the value of the voltage (UG) across the delivery pump (170) determined in the "off" periods, and/or in order to determine the torque (M) to be applied by the delivery pump (170), on the basis of the rotational speed (N) of the delivery pump (170), and/or in order to determine the differential pressure (PD), on the basis of the torque (M) to be applied by the delivery pump (170), characteristic maps are used.

5. Method of determining a pressure variable in a system, in particular in a braking system, having a delivery pump (170), in particular a scavenging pump, which is connected by a first line (105) to a brake master cylinder (110), and which is also connected to a storage chamber (175), the delivery pump (170) being activated cyclically and the voltage (UG) across the delivery pump (170) being detected during the "off" periods, in which a differential pressure (PD) between a first pressure (PV) in the first line (105), in particular the pilot pressure prevailing in the brake master cylinder (110), and a second pressure (PS) in the storage chamber (175) is determined, characterized in that the differential pressure (PD) is determined on the basis of the voltage (UG) across the delivery pump (170) in the "off" periods, a desired value for the voltage (UG) and the pulse duty factor which is needed to readjust the voltage (UG) to the desired value, the voltage drop (UG) across the delivery pump (170) being regulated during the "off" periods and the supply voltage (Ubat) being known.

6. Method according to Claim 1 or 2 or 5, characterized in that, while the differential pressure (PD) is being determined, the delivery pump (170) delivers hydraulic fluid from the wheel-brake cylinder (120), via the storage chamber (175), into the brake master cylinder (110).

7. Method according to Claim 1 or 2 or 5, characterized in that the value of the differential pressure (PD) determined is taken into account when activating inlet valves (100) and/or outlet valves (160) contained in the braking system, and/or in that the differential pressure (PD) determined is used as a measure of the pilot pressure (PV) prevailing in the brake master cylinder.

8. Method according to Claim 1 or 5, characterized in that the value of rotational speed (N) of the delivery pump (170) is detected, and is fed to a controller (230), in particular a scavenging pump controller, for the purpose of speed regulation, the controller (230) regulating the rotational speed (N) of the delivery pump (170) by varying the pulse duty factor or the mark/space ratio, and/or in that the value of the voltage (UG) detected across the delivery pump (170) is fed to a controller (230), in particular a scavenging pump controller, for the purpose of voltage regulation, the controller (230) regulating the voltage (UG) by varying the pulse duty factor or the mark/space ratio, and/or in that, with the aid of the controller (230), and on the basis of a voltage drop across a current measuring means (210), the current flowing through the delivery pump (170) is regulated to a predefinable desired value.

9. Device for determining a pressure variable in a system, in particular in a braking system, which contains a delivery pump (170), in particular a scavenging pump, which is connected by a first line (105) to a brake master cylinder (110) and which is also connected to a storage chamber (175), which system contains means (150) for the cyclic activation of the delivery pump (170), which system contains means (220) with which the voltage (UG) across the delivery pump (170) may be detected during the "off" periods, which system contains means (220) for determining a differential pressure (PD), the differential pressure (PD) between a first pressure (PV) in the first line (105), in particular the pilot pressure prevailing in the brake master cylinder (110), and a second pressure (PS) in the storage chamber (175) being determined, characterized in that the differential pressure (PD) is determined as follows in the means (220) for determining the differential pressure (PD) :
the rotational speed (N) of the delivery pump (170) is determined on the basis of the value of the voltage (UG) across the delivery pump (170) determined in the "off" periods,
the torque (M) to be applied by the delivery pump (170) is determined on the basis of the rotational speed (N) of the delivery pump (170),
the differential pressure (PD) is determined on the basis of the torque (M) to be applied by the delivery pump (170), and the torque (M) to be applied by the delivery pump (170) is determined on the basis of the voltage drop and/or the variation in the voltage (UG) across the delivery pump (170) in the "off" periods,
the differential pressure (PD) is determined on the basis of the torque (M) to be applied by the delivery pump (170), and/or the differential pressure (PD) is determined on the basis of the voltage (UG) across the delivery pump (170) in the "off" periods, a desired value for the voltage (UG) and the pulse duty factor which is needed in order to readjust the voltage (UG) to the desired value, the voltage drop (UG) across the delivery pump (170) being regulated during the "off" periods and the supply voltage (Ubat) being known.

## Revendications

1. Procédé servant à déterminer la grandeur d'une pression dans une installation, en particulier dans une installation de freinage, avec une pompe de transfert (170), en particulier une pompe de transfert au retour qui est en liaison par une première conduite (105) avec un maître cylindre (110), et qui est en outre en liaison avec une chambre d'accumulation (175), la pompe de transfert (170) étant commandée de façon synchronisée, et la tension (UG) appliquée à la pompe de transfert (170) étant détectée pendant les pauses de débranchement, procédé dans lequel on détermine une pression différentielle (PD) entre une première pression (PV) dans la première conduite (105), en particulier entre la pression d'alimentation qui règne dans le maître cylindre (110), et une deuxième pression (PS) dans la chambre d'accumulation (175),
caractérisé en ce que l'on détermine la pression différentielle (PD) de la manière suivante :
• en partant de la chute de la tension et/ou de l'évolution de la tension (UG) sir la pompe de transfert (170) pendant les pauses de débranchement on détecte le couple (M) à fournir par la pompe de transfert (170),
• en partant du couple (M) à fournir par la pompe de transfert (170), on détermine la pression différentielle (PD).

2. Procédé servant à déterminer la grandeur d'une pression dans une installation, en particulier dans une installation de freinage, avec une pompe de transfert (170), en particulier une pompe de transfert au retour qui est en liaison par une première conduite (105) avec un maître cylindre (110), et qui est en outre en liaison avec une chambre d'accumulation (175), la pompe de transfert (170) étant commandée de façon synchronisée, et la tension (UG), appliquée à la pompe de transfert (170), étant détectée pendant les pauses de débranchement, procédé dans lequel on détermine une pression différentielle (PD) entre une première pression (PV) dans la première conduite (105), en particulier entre la pression d'alimentation qui règne dans le maître cylindre (110), et une deuxième pression (PS) dans la chambre d'accumulation (175),
caractérisé en ce que
l'on détermine la pression différentielle (PD) de la manière suivante :
• en partant de la valeur de la tension (UG) appliquée à la pompe de transfert (170) pendant les pauses de débranchement on détermine la vitesse de rotation (N) de la pompe de transfert (170),
• en partant de la vitesse de rotation (N) de la pompe de transfert (170) on détermine le couple (M) à fournir par la pompe de transfert (170),
• en partant du couple (M) à fournir par la pompe de transfert (170), on détermine la pression différentielle (PD).

3. Procédé selon la revendication 2,
caractérisé en ce que
• l'on amène la valeur de la vitesse de rotation (N) de la pompe de transfert (170) à une commande, en particulier à la commande d'une pompe de transfert au retour, pour assurer le réglage de la vitesse de rotation, en réalisant par la commande (230) une régulation de la vitesse de rotation (N) de la pompe de transfert (170) en faisant varier le taux d'impulsions ou le rapport entre le temps de pause entre les impulsions et la durée des impulsions, et/ou
• l'on amène la valeur déterminée de la tension (UG), appliquée à la pompe de transtert (170), à une commande (230), en particulier à la commande d'une pompe de transfert au retour, pour assurer la régulation de la tension, en réalisant une régulation de la tension (UG) avec la commande (230) en faisant varier le taux d'impulsions ou le rapport entre le temps de pause entre les impulsions et la durée des impulsions, et/ou
• à l'aide de la commande (230) on règle le courant qui passe à travers la pompe de transfert (170) sur une valeur de consigne que l'on peut définir au préalable en partant d'une chute de la tension sur un moyen de mesure du courant (210).

4. Procédé selon la revendication 1 ou 2,
caractérisé en ce que
• on utilise des champs caractéristiques
• pour déterminer la vitesse de rotation (N) de la pompe de transfert (170), en partant de la valeur de la tension (UG), qui est appliquée à la pompe de transtert (170), et qui est déterminée pendant les pauses de débranchement, et/ou
• pour déterminer le couple (M) à fournir par la pompe de transfert (170) en partant de la vitesse de rotation (N) de la pompe de transfert (170), et/ou
• pour déterminer la pression différentielle (PD), en partant du couple (M) à fournir par la pompe de transfert (170).

5. Procédé servant à déterminer la grandeur d'une pression dans une installation, en particulier dans une installation de freinage, avec une pompe de transfert (170), en particulier une pompe de transfert au retour, qui est en liaison par une première conduite (105) avec un maître cylindre (110), et qui est en outre en liaison avec une chambre d'accumulation (175), la pompe de transfert (170) étant commandée de façon synchronisée, et la tension (UG) appliquée à la pompe de transfert (170) étant détectée pendant les pauses de débranchement, procédé dans lequel on détermine une pression différentielle (PD) entre une première pression (PV) dans la première conduite (105), en particulier entre la pression d'alimentation qui règne dans le maître cylindre (110), et une deuxième pression (PS) dans la chambre d'accumulation (175),
caractérisé en ce qu'
on détermine la pression différentielle (PD) en partant de la tension (UG), appliquée pendant les pauses de débranchement à la pompe de transfert (170), d'une valeur de consigne pour la tension (UG) et du taux d'impulsions qui est nécessaire, pour régler la tension (UG) sur la valeur de consigne, en réglant la tension (UG) qui chute sur la pompe de transfert (170) pendant les pauses de débranchement, et en connaissant la tension d'alimentation (Ubat).

6. Procédé selon la revendication 1 ou 2 ou 5,
caractérisé en ce que
pendant la détermination de la pression différentielle (PD) la pompe de transfert (170) transfert du liquide hydraulique à partir du cylindre de frein de roue (120) par l'intermédiaire de la chambre d'accumulation (175) dans le maître cylindre (110).

7. Procédé selon la revendication 1 ou 2 ou 5,
caractérisé en ce que
la valeur déterminée de la pression différentielle (PD) est prise en considération lors de la commande des vannes d'admission (100) et ou des vannes de décharge (160), qui sont contenues dans l'installation de freinage, et/ou
en ce que
la pression différentielle déterminée (PD) est utilisée comme mesure de la pression d'alimentation (PV) qui règne dans le maître cylindre.

8. Procédé selon la revendication 1 ou 5,
caractérisé en ce qu'
• on détecte la valeur de la vitesse de rotation (N) de la pompe de transfert (170) et on l'amène à une commande (230), en particulier à la commande d'une pompe de transfert au retour, pour régler la vitesse de rotation, en effectuant par la commande (230) une régulation de la vitesse de rotation (N) de la pompe de transfert (170) en faisant varier le taux d'impulsions ou le rapport entre la durée des impulsions et les pauses entre les impulsions, et/ou
• on amène la valeur déterminée de la tension (UG), appliquée à la pompe de transfert (170), à une commande (230), en particulier à la commande d'une pompe de transfert au retour, pour assurer la régulation de la tension, en réalisant une régulation de la tension (UG) avec la commande (230) en faisant varier le taux d'impulsions ou le rapport entre le temps de pause entre les impulsions et la durée des impulsions, et/ou
• on règle sur une valeur de consigne que l'on peut définir au préalable le courant qui passe à travers la pompe de transfert (170), à l'aide de la commande (230), en partant d'une chute de tension sur un moyen de mesure du courant (210).

9. Dispositif servant à déterminer la grandeur d'une pression dans une installation, en particulier dans une installation de freinage, qui contient une pompe de transfert (170), en particulier une pompe de transfert au retour, qui est en liaison par une première conduite (105) avec un maître cylindre (110), et qui est en outre en liaison avec une chambre d'accumulation (175), qui contient des moyens (150) servant à la commande synchronisée de la pompe de transfert (170), qui contient des moyens (220) avec lesquels on peut détecter la tension (UG) qui est appliquée à la pompe de transfert (170) pendant les pauses de débranchement, qui contient des moyens (220) servant à déterminer une pression différentielle (PD),en déterminant la pression différentielle (PD) entre une première pression (PV) dans la première conduite (105), en particulier entre la pression d'alimentation qui règne dans le maître cylindre (110), et une deuxième pression (PS) dans la chambre d'accumulation (175),
caractérisé en ce que
l'on détermine la pression différentielle (PD), dans les moyens (220) qui servent à déterminer la pression différentielle (PD), de la manière suivante :
• en partant de la valeur de la tension (UG) appliquée à la pompe de transfert (170), déterminée pendant les pauses de débranchement, on détermine la vitesse de rotation (N) de la pompe de transfert (170),
• en partant de la vitesse de rotation (N) de la pompe de transfert (170) on détermine le couple (M) à fournir par la pompe de transfert (170),
• en partant du couple (M) à fournir par la pompe de transfert (170), on détermine la pression différentielle (PD), et/ou
• en partant de la chute de la tension et/ou de l'évolution de la tension (UG) sur la pompe de transfert (170) pendant les pauses de débranchement on détecte le couple (M) à fournir par la pompe de transfert (170),
• en partant du couple (M) à fournir par la pompe de transtert (170), on détermine la pression différentielle (PD), et/ou
• en partant de la tension (UG), appliquée pendant les pauses de débranchement à la pompe de transfert (170), d'une valeur de consigne pour la tension (UG) et du taux d'impulsions qui est nécessaire, pour régler la tension (UG) sur la valeur de consigne, on règle la pression différentielle (PD), en réglant la tension (UG) qui chute sur la pompe de transfert (170) pendant les pauses de débranchement, et en connaissant la tension d'alimentation (Ubat).
